# EUROPEAN PATENT APPLICATION

(11) **EP 2 264 104 A1**
(43) Date of publication of application: **22.12.2010**
(21) Application number: 09305561.4
(22) Date of filing: 18.06.2009
(51) Int. Cl.: C08L 95/00, C08K 5/521

(54) **Bitumen composition**

(71) Applicant: Shell Internationale Research Maatschappij B.V., 2596 HR Den Haag (NL)
(72) Inventor: Clavel, Norbert, 76650 Petit Couronne (FR); Bourbigot, Serge, 59652 Villeneuve d'ascq cedex (FR); Oriane, Cérin, 59652 Villeneuve d'ascq cedex (FR)
(74) Representative: Matthezing, Robert Maarten

(57) **Abstract**

A bitumen composition comprising a phosphate ester of formula (I) or formula (II): 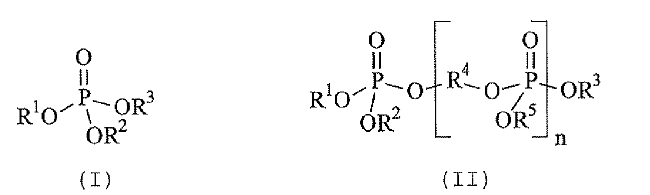 wherein R¹, R², R³ and R⁵ are independently chosen from alkyl, aralkyl or aryl groups, R⁴ is alkylene or arylene and n is an integer, is disclosed. The bitumen composition has improved flame retardancy.

## Description

### Field of the Invention

The invention relates to a bitumen composition and further relates to products comprising the bitumen composition and to the use of such products.

### Background of the Invention

Bitumen is a viscous liquid or a solid consisting essentially of hydrocarbons and their derivatives. It is soluble in trichloroethylene and softens gradually when heated. Compositions comprising bitumen are incorporated into products such as roofing felts, building foundation liners and storage tank liners. These products are typically formed by impregnating or coating a substrate such as a non-woven fabric with one or more bitumen layers.

It is desirable to improve the flame retardancy of bitumen compositions that are used to prepare products such as roofing felts. However, it is important that the incorporation of flame retardant compounds does not impair the rheological properties or storage stability of the bitumen composition.

US 5,516,817 discloses bitumen formulations wherein flame retardancy is provided by the use of a functional filler and an intumescent material. Intumescent materials function by increasing the amount of char formed upon burning. A layer of char develops, forming a barrier between the flame and underlying material. The suggested intumescent materials include ammonium polyphosphate and ethylenediamine phosphate.

The present inventors have sought to provide new bitumen formulations with effective flame retardancy, whilst retaining necessary rheological properties and storage stability.

### Summary of the Invention

Accordingly, the present invention provides a bitumen composition comprising bitumen and comprising a phosphate ester of formula (I) or formula (II): 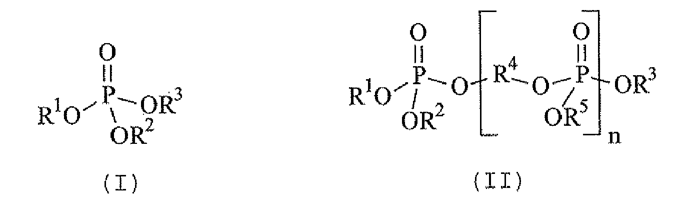 wherein R¹, R², R³ and R⁵ are independently chosen from alkyl, aralkyl or aryl groups, R⁴ is alkylene or arylene and n is an integer.

The present inventors have found that bitumen compositions comprising such phosphate esters have improved flame retardancy whilst retaining effective rheological properties and storage stability.

### Detailed Description of the Invention

The bitumen in the bitumen composition of the invention may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidised or blown bitumen, naphthenic bitumen or mixtures thereof. The bitumen in the bitumen composition may be prepared by blending a bitumen with a flux oil, e.g. an aromatic, napthenic or paraffinic flux oil. The penetration at 25°C of the bitumen (as measured according to EN 1426) is preferably between 100 and 250. (If the bitumen is a blend of bitumen and flux oil, the penetration is preferably between 100 and 250 after the flux oil has been blended with the bitumen.)

The quantity of bitumen in the bitumen composition is preferably at least 90wt%, based upon the weight of the bitumen composition. Bitumen is typically the least expensive component in the composition so it is desirable to maximise the quantity of bitumen.

The bitumen composition of the invention comprises a phosphate ester of formula (I) or formula (II): 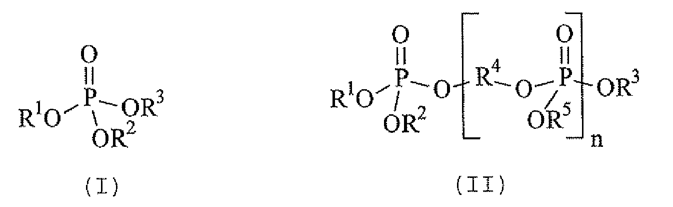 wherein R¹, R², R³ and R⁵ are independently chosen from alkyl, aralkyl or aryl groups, R⁴ is alkylene or arylene and n is an integer. The term "alkylene" is used to describe a divalent radical derived from an aliphatic hydrocarbon. The term "arylene" is used to describe a divalent radical that includes an aryl function, but may also include aliphatic portions. n is an integer, preferably from 1 to 50. Preferably the alkyl, aralkyl, aryl, alkylene and arylene groups are C₁₋₂₀ groups. The alkyl, aralkyl, aryl, alkylene and arylene groups may contain heteroatoms (e.g. nitrogen atoms), but are preferably hydrocarbyl groups. Preferably R¹, R², R³ and R⁵ are C₁₋₅ alkyl groups, phenyl groups or cresyl groups, and R⁴ is an arylene group derived from Bisphenol A: 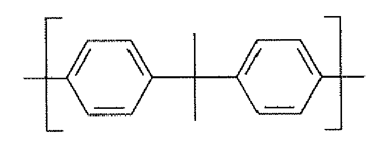 More preferably the phosphate ester is of formula (I). Most preferably, the phosphate ester is of formula (I), and R¹, R² and R³ are C₁₋₅ alkyl groups.

Commercially available phosphate esters of formula (I) include Exolit OP 920 from Clariant (R¹, R² and R³ are C₁₋₅ alkyl groups), Disflamoll TPK, DPK and TP from Lanxess (R¹, R² and R³ are phenyl or cresyl groups) and NcendX P30 from Albemarle (R¹, R² and R³ are phenyl groups). A commercially available phosphate ester of formula (II) is Fyrolflex BDP from ICL-IP (R¹, R², R³ and R⁵ are phenyl; R⁴ is a bridging group derived from Bis-phenol A).

Exolit OP 920 from Clariant is actually supplied as a phosphate ester in aminoethanol. The present inventors have found that it is necessary to remove the aminoethanol from the Exolit OP 920 in order to provide a bitumen composition that can be stored at hot temperatures. The aminoethanol can be removed by placing the Exolit OP 920 in an oven at a temperature above the boiling point of aminoethanol for a period of e.g. two hours.

The quantity of phosphate ester in the bitumen composition is preferably from 5 to 50wt%, based upon the weight of the bitumen composition, more preferably from 10 to 40wt%, most preferably from 15 to 35wt%. The preferred quantity of phosphate ester is likely to be a balance between increasing the fire retardancy (and therefore increasing the quantity of phosphate ester) and minimising the cost (and therefore decreasing the quantity of phosphate ester).

The bitumen composition preferably further comprises a filler material. Filler materials are usually incorporated into bitumen compositions for roofing applications at from 20 to 45wt% based upon the weight of the bitumen composition. Typical fillers include silica, limestone, slate dust and talc. Fillers usually have a particle size below 75µm. In a preferred embodiment of the invention, the bitumen composition comprises a nanomaterial as a filler, preferably at from 0.5 to 8wt% based upon the weight of the bitumen composition. A nanomaterial has morphological features that are smaller than 0.1µm in at least one dimension. The nanomaterial can be a nanoclay such as montmorillonite clay or can be carbon nanotubes.

The bitumen composition preferably further comprises a polymer material. The polymer material is preferably incorporated at from 5 to 20wt%, more preferably from 8 to 16wt%. The polymer is preferably an elastomeric polymer, more preferably a styrenic block copolymer such as styrene-butadiene-styrene, or is preferably a thermoplastic polyolefin such as atactic polypropylene.

The bitumen compositions of the invention may be prepared by high shear blending. Preferably this blending is carried out between 150 and 220°C, more preferably between 170 and 200°C.

The present invention further provides a product comprising the bitumen composition of the invention incorporated on substrate. The substrate may be non-woven or woven fabric, glass fabric cloth, paper, plastic sheeting, metal foil or metal mesh, but is preferably a non-woven/woven or glass fabric. Preferred materials include polyester scrim, polypropylene scrim and fibreglass scrim. A layer may be formed on one or both sides of the substrate by dipping, coating, spraying, or impregnating using methods known in the art.

The invention further provides the use of a product according to the invention, in a roofing process. A typical roofing product comprises a polyester or fibreglass scrim that has been waterproofed by coating with a product such as oxidised bitumen, penetration grade bitumen or polymer-modified bitumen all with and without fillers. The waterproofed substrate is then coated in self-adhesive polymer-modified bitumen. Mineral material may be coated onto a face of the self-adhesive bitumen, and release films (e.g. polyethylene or polypropylene) may be coated onto one or both faces of the self-adhesive bitumen. The roofing material may be applied using standard techniques, but can be applied at lower temperatures (e.g. down to 0°C) than commercial roofing materials, and can also be applied in damp conditions without the use of hot equipment.

The products of the invention may also be used as sheet membranes for waterproofing applications such as damp proof membranes and adhesive tapes which are used in the building industry.

### Examples

The invention will now be described by reference to examples which are not intended to be limiting of the invention.

### Preparation of Bitumen Compositions

Samples were prepared using a distillation bitumen having a penetration of 150. Bitumen was pre-heated to 160°C in an oven, and was then heated to 170°C with stirring. The phosphate ester flame retardants were mixed into the bitumen using low shear mixing for approximately 30 to 60 minutes. Exolit OP 920 from Clariant is a phosphoric acid alkyl ester compounded with aminoethanol. Both untreated and treated samples of Exolit OP 920 were used; the treated samples were placed in an oven at 173°C for 2 hours to remove the aminoethanol. Disflamoll TPK from Lanxess is a phosphoric acid tricresyl ester. Disflamoll DPK from Lanxess is a phosphoric acid biphenyl-cresyl ester. Disflamoll TP from Lanxess is a phosphoric acid triphenyl ester. NcendX P30 from Albemarle is a phosphoric acid triphenyl ester. Fyrolflex BDP from ICL IP is Bis-phenol A-bis (diphenyl phosphate). In Examples 6 to 8, filler materials (carbon nanotubes and Cloisite ® clay) were additionally incorporated into the composition. The carbon nanotubes were NC7000 nanotubes from Nanocyl (multiwall carbon nanotubes of about 90% purity). The Cloisite ® clay was Cloisite ® 30B from Southern Clay Product (a montmorillonite clay).

### Testing of Bitumen Compositions

A mass loss calorimeter (ISO 13927) was used to evaluate the Rate of Heat Release (RHR) of a bitumen sample during combustion. Samples of dimension 10cm x 10cm received a radiant heat flux emitted by a cone. The temperature of the emitted gases was measured to measure the RHR. The RHR is a measure of the size of the fire, so a lower RHR indicates a bitumen compositions with improved fire retardancy properties.

Table 1 provides details of the compositions and also gives the diminution of RHR, as a percentage, when compared to the RHR for unmodified bitumen (comparative example 1):

**Table 1**

| | Additives | Diminution of RHR (%) |
|---|---|---|
| Comparative | None | - |
| Example 1 | | |
| Example 1 | 10wt% Exolit OP920 (Untreated) | 7 |
| Example 2 | 20wto Exolit OP920 (Untreated) | 48 |
| Example 3 | 30wt% Exolit OP920 (Untreated) | 59 |
| Example 4 | 20wt% Exolit OP920 (Treated) | 30 |
| Example 5 | 30wt% Exolit OP920 (Treated) | 70 |
| Example 6 | 29wt% Exolit OP 920 (Treated) | 53 |
| | 1wt% carbon nanotubes | |
| Example 7 | 25wt% Exolit OP 920 (Treated) | 61 |
| | 5wt% Cloisite ® clay | |
| Example 8 | 25wt% Exolit OP 920 (Treated) | 77 |
| | 4wt% Cloisite ® clay | |
| | 1wt% carbon nanotubes | |
| Example 9 | 10wit% Fyrolflex | 9 |
| Example 10 | 15wt% Fyrolflex | 7 |
| Example 11 | 20wt% Fyrolflex | 17 |
| Example 12 | 10wt% Disflamoll TPK | 7 |
| Example 13 | 30wt% Disflamoll TPK | 16 |
| Example 14 | 10wt% Disflamoll DPK | 20 |
| Example 15 | 30wt% Disflamoll DPK | 23 |
| Example 16 | 10wt% Disflamoll TP | 8 |
| Example 17 | 30wt% Disflamoll TP | 28 |
| Example 18 | 10wt% NcendX P30 | 25 |
| Example 19 | 20wt% NcendX P30 | 24 |
| Example 20 | 30wt% NcendX P30 | 23 |

NB - The weight percentages of treated Exolit OP920 are based upon weights of the untreated Exolit OP920, i.e. the actual weight of additive was slightly less (due to removal of the solvent), but the amount of flame retardant is the same as for the untreated Exolit OP920 examples (e.g. the amount of flame retardant in examples 2 and 4 was the same).

All the Examples of the invention show a diminution in RHR, with the best results given by the bitumen formulations comprising 30wt% Exolit OP920 or comprising 25-29wt% Exolit OP920 plus fillers.

### Preparation and Testing of Polymer-Modified Bitumen Compositions

Bitumen was heated to 180°C and styrene-butadiene-styrene polymer was added over a period of two minutes. The mixture was stirred for over 1 hour. For Example 21, a flame retardant had been added to the bitumen before the polymer was added. Table 2 provides details of the polymer-modified bitumen compositions and also gives the diminution of RHR, as a percentage, when compared to the RHR for polymer modified bitumen that does not contain flame retardant (comparative example 2):

**Table 2**

| | Additives | Diminution of RHR (%) |
|---|---|---|
| Comparative Example 2 | None | - |
| Example 21 | 30wt% Exolit OP920 (Treated) | 54 |

The polymer-modified bitumen comprising the Exolit OP920 showed a considerable diminution of RHR.

### Preparation and Testing of Roofing Felts

Bitumen was heated to 180°C and styrene-butadiene-styrene polymer was added over a period of two minutes. The mixture was stirred for over 1 hour. For Example 22, a flame retardant had been added to the bitumen before the polymer was added. The polymer-modified bitumens were shaped into bitumen membranes that could be used as a roofing felt. Table 3 provides details of the roofing felt compositions and also gives the diminution of RHR, as a percentage, when compared to the RHR for the roofing felt that does not contain flame retardant (comparative example 3):

**Table 3**

| | Formulation | Diminution of RHR (%) |
|---|---|---|
| Comparative | 57.8wt% bitumen | - |
| Example 3 | 7.2% styrene-butadiene-styrene | |
| | 35wt% filler | |
| Example 22 | 64.3wt% bitumen | 49 |
| | 8.1% styrene-butadiene-styrene | |
| | 27.6wt% Exolit OP920 (Treated) | |

The roofing felt comprising the Exolit OP920 showed a considerable diminution of RHR.

## Claims

1. A bitumen composition comprising bitumen and comprising a phosphate ester of formula (I) or formula (II): 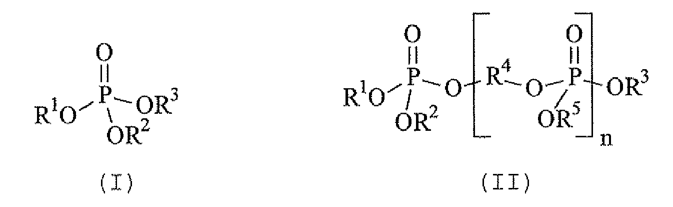 wherein R¹, R², R³ and R⁵ are independently chosen from alkyl, aralkyl or aryl groups, R⁴ is alkylene or arylene and n is an integer.

2. A bitumen composition according to claim 1, wherein R¹, R², R³ and R⁵ are C₁₋₅ alkyl groups, phenyl groups or cresyl groups, and R⁹ is an arylene group derived from Bisphenol A:

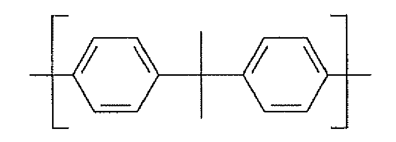

3. A bitumen composition according to claim 1, wherein the phosphate ester is of formula (I), and R¹, R² and R³ are C₁₋₅ alkyl groups.

4. A bitumen composition according to any preceding claim, further comprising 20 to 45wt% of a filler material, based upon the weight of the bitumen composition.

5. A bitumen composition according to any preceding claim, further comprising 0.5 to 8wt% of a nanomaterial, based upon the weight of the bitumen composition.

6. A bitumen composition according to any preceding claim, further comprising a polymer material.

7. A bitumen composition according to claim 6, wherein the polymer material is a styrenic block copolymer.

8. A product comprising a bitumen composition according to any preceding claim incorporated on substrate chosen from non-woven or woven fabric, glass fabric cloth, paper, plastic sheeting, metal foil or metal mesh.

9. Use of a product according to claim 8 in a roofing process.
